# EUROPEAN PATENT APPLICATION

(11) **EP 0 901 074 A2**
(43) Date of publication of application: **10.03.1999**
(21) Application number: 98116823.0
(22) Date of filing: 04.09.1998
(51) Int. Cl.: G06F 9/46

(54) **Real-time operating system with task execution controlling functions for allowing easy understanding of how actions are linked among tasks**

(30) Priority: 05.09.1997 JP 257910/97
(71) Applicant: NEC CORPORATION, Tokyo (JP)
(72) Inventor: Kawaguchi, Akira c/o NEC Corporation, Tokyo (JP)
(74) Representative: Betten & Resch

(57) **Abstract**

A real-time operating system with task execution controlling functions comprises a task execution parameter set storing part (50) for storing task execution parameter sets (70), each of which is a collection of task execution parameters (60) for all tasks comprising a transaction of software and has been organized by every state of a transaction during the software design phase, a task execution parameter set switching means (30) for reading one of said task execution parameter sets (70) as required from a task execution parameter set storing means (50), and a task execution controlling means (20) for controlling each task by switching execution parameters for multiple tasks collectively by using the task execution parameter set (70) that has been read.

## Description

### BACKGROUNDS OF THE INVENTION

### FIELD OF THE INVENTION

The present invention relates to a real-time operating system with task execution controlling functions, and more particularly, to a real-time operating system with task execution controlling functions for allowing easy verification as to whether the operation of software that is realized through linked actions among multiple tasks is in conformance to required specifications.

### DESCRIPTION OF THE RELATED ART

A software development project, in general, involves three phases: system analysis, design, and implementation. Of these phases, the system analysis phase analyzes requirements for a system and clarifies the behavior of the system. The design phase determines how the behavior of the system as clarified in the analysis phase should be realized. The implementation phase performs coding in accordance with the results of the design phase.

When this approach to software development is adopted in the development of software using a real-time OS, such as software to be embedded in equipment, that is, the software which must be designed with the execution structures of multiple tasks comprising software, the parts for controlling the execution of tasks (task execution structures) are usually created by designing the linkage of actions among related tasks and then by reflecting the results of the design in the code to be implemented on a task-to-task basis. Task execution structures handle, for example, state transition of task (the creation of a task, the start and exit of a task, etc), priority in the execution of different tasks, and the form of task driven (including an drive event in the case of event driven or an drive cycle in the case of cyclic driven). The design of the linkage of actions among tasks is undertaken by a software designer and an implementor separately.

In the conventional development of software using a real-time OS, there are a considerable gap in meaning between the behavior of a system obtained through system analysis and the design of task execution structures for realizing the behavior, often preventing the software designer from deriving task execution structures directly from the results of system analysis. In such cases, whether the results of system analysis will be reflected accurately in the design of software largely relies on the degree of the experience and skill of the software designer.

In the conventional real-time OS as described above, it is difficult to identify the linkage among the actions of multiple tasks that comprise software, since multiple task execution structures that comprise software are specified in a distributed manner among individual task implementations. This leads to a drawback that it is difficult to verify whether the operation of software that is realized through linked actions of multiple tasks is in conformance to the specifications required from the software.

In addition, in the said conventional real-time OS, all the task execution structures that comprise software are specified during the implementation phase for software, leading to another drawback that errors are likely to occur during the process in which the required specifications for software are made reflected in the implementation. Since the realization of software using a real-time OS is required to cover task execution structures as well, there are a considerable gap in meaning between the creation of required specifications for software and the implementation of task execution structures to realize them. This means that whether required specifications will be reflected accurately in the software implementation largely relies on the degree of the experience and skill of the software implementor, often causing errors to occur.

This gap in meaning between the creation of required specifications for software and the implementation of task execution structures to realize them also makes it difficult for the creator of the required specifications to understand directly the implementation of task execution structures, leading to difficulties in finding errors.

### SUMMARY OF THE INVENTION

One objective of the present invention is to provide a real-time OS with task execution controlling functions for allowing easy understanding of how actions are linked among tasks to realize required behavior and allowing easy verification as to whether the operation of software that is realized through linked actions among multiple tasks is in conformance to required specifications.

Another objective of the present invention is to allow the work for realizing required specifications for software using a real-time OS to be performed successfully through a ordinary technique, with minimum reliance on experience and skill in implementation, thereby allowing required specifications to be reflected in the operation of software accurately and making it possible to verify easily as to whether the required specifications are realized in the operation of software accurately.

According to one aspect of the invention, a real-time operating system with task execution controlling functions, comprises
task execution parameter set storing means for storing task execution parameter sets, each of which is a collection of task execution parameters for all tasks comprising a transaction of software and has been organized by every state of a transaction based on required specifications and system analysis results during the software design phase,
task execution parameter set switching means for reading one of the task execution parameter sets as required depending on the state of a transaction from the task execution parameter set storing means, and
task execution controlling means for controlling the execution of each task by switching execution parameters for multiple tasks collectively by using the task execution parameter set read by the task execution parameter set switching means.

In the preferred construction, the task execution parameters include the timing for state transition of tasks such as creating , starting, exiting and deleting a task, the priority in the execution of different tasks, and the form of task driven.

In another preferred construction, the real-time operating system with task execution controlling functions further comprises task execution parameter set switching system calls as an interface for notifying the task execution parameter set switching means when real-time operating system receives a direction from user application to switch the task execution parameter set.

In another preferred construction, the real-time operating system with task execution controlling functions further comprises switching direction generating means for detecting a state transition of a transaction based on state transition of each tasks and occurrence of external event and directing the task execution parameter set switching means to switch the task execution parameter set as appropriate according to state transition of a transaction.

In another preferred construction, the real-time operating system with task execution controlling functions further comprises switching direction generating means for detecting a state transition of a transaction based on state transition of each tasks and occurrence of external event and directing the task execution parameter set switching means to switch the task execution parameter set as appropriate according to state transition of a transaction, and switching information storing means for storing data which defines event indicating state transition of a transaction that is required by the switching direction generating means to direct the task execution parameter set to be switched, and data which defines the destination state after state transition of a transaction.

Also, the task execution parameter sets are read on system initialization and are stored in the task execution parameter set storing means,
task execution parameter set that has been specified as initial state is referred to from the task execution parameter set storing means and is set in the task execution controlling means, and
when the task execution parameter set switching system call is issued, task execution parameters are read by the task execution parameter set switching means from the task execution parameter set storing means and are set in the task execution controlling means.

According to another aspect of the invention, a computer readable memory for storing a real-time operating system with task execution controlling functions, wherein the real-time operating system comprises
task execution parameter set storing step of storing task execution parameter sets, each of which is a collection of task execution parameters for all tasks comprising a transaction of software and has been organized by every state of a transaction based on required specifications and system analysis results during the software design phase,
task execution parameter set switching step of reading one of the task execution parameter sets as required depending on state of a transition from the task execution parameter set storing step, and
task execution controlling step of controlling the execution of each task by switching execution parameters for multiple tasks collectively by using the task execution parameter set read by the task execution parameter set switching step.

In the preferred construction, in the real-time operating system, the task execution parameters include the timing for state transition of tasks such as creating, starting, exiting and deleting a task, the priority in the execution of different tasks, and the form of task driven.

In another preferred construction, the real-time operating system further comprising task execution parameter set switching system calls as an interface for notifying the task execution parameter set switching step when real-time operating system receives a direction from user application to switch the task execution parameter set.

In another preferred construction, the real-time operating system further comprising switching direction generating step of detecting a state transition of a transaction based on state transition of each tasks and occurrence of external event and directing the task execution parameter set switching step to switch the task execution parameter set as appropriate according to state transition of a transaction.

In another preferred construction, the real-time operating system further comprises switching direction generating step of detecting a state transition of a transaction based on state transition of each tasks and occurrence of external event and directing the task execution parameter set switching step to switch the task execution parameter set as appropriate according to changes in such task execution state, and switching information storing step of storing data which defines event indicating state transition of a transaction that is required by the switching direction generating step to direct the task execution parameter set to be switched, and data which defines the destination state after state transition of a transaction.

In another preferred construction, the real-time operating system reads the task execution parameter sets on system initialization and stores the task execution parameter sets in the task execution parameter set storing step, refers to task execution parameter set that has been specified as initial state from the task execution parameter set storing step and sets the task execution parameter set in the task execution controlling step, and when the task execution parameter set switching system call is issued, reads task execution parameters by the task execution parameter set switching step from the task execution parameter set storing step and sets the task execution parameters in the task execution controlling step.

Other objects, features and advantages of the present invention will become clear from the detailed description given herebelow.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a block diagram showing the configuration of a real-time OS with task execution controlling functions according to the first embodiment of the present invention;
Fig. 2 is a flow chart showing the design procedure for software using a real-time OS according to the present invention;
Fig. 3 is a flow chart describing the operation of a real-time OS with task execution controlling functions according to the first embodiment of the present invention;
Fig. 4 is a block diagram showing the configuration of a real-time OS with task execution controlling functions according to the second embodiment of the present invention;
Fig. 5 is a diagram showing an embodiment of task execution structure design;
Fig. 6 is a diagram showing example contents of a task execution parameter set created from the task execution structure design of Fig. 5;
Fig. 7 is a diagram showing example contents of system calls for switching task execution parameters.

### DESCRIPTION OF THE PREFERRED EMBODIMENT

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

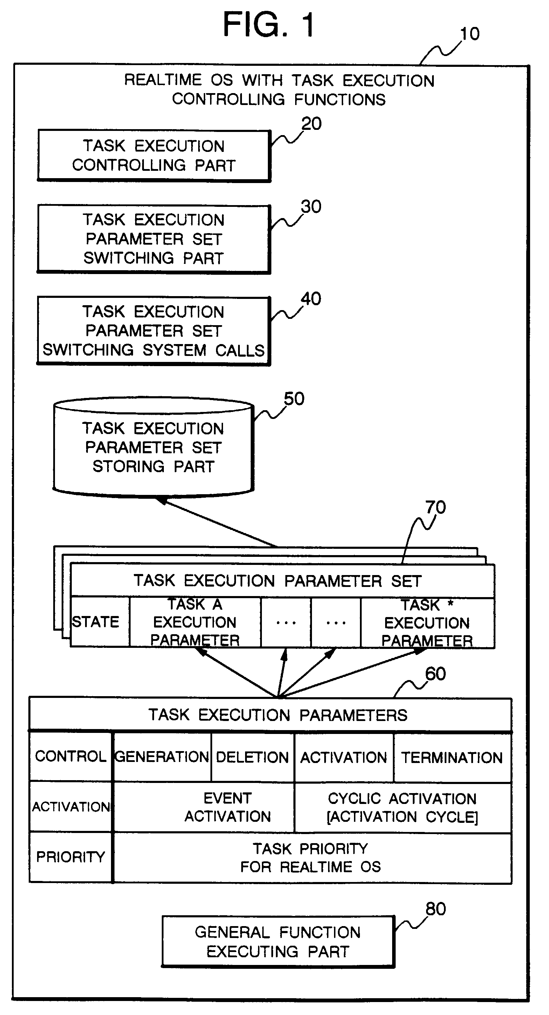

Fig. 1 is a block diagram showing the configuration of a real-time OS with task execution controlling functions according to the first embodiment of the present invention.

In Fig. 1, the real-time OS 10 includes, in addition to a general function execution part 80 for executing general functions as a general real-time OS, a task execution parameter set storing part 50 for storing task execution parameter sets 70, a task execution controlling part 20 for controlling automatically the execution of tasks collectively in accordance with task execution parameters 60 that are specified in the given task execution parameter set 70, a task execution parameter set switching part 30 for reading a task execution parameter set 70 from the task execution parameter set storing part 50 and passing it to the task execution controlling part 20, and task execution parameter switching system calls 40 for notifying the task execution parameter set switching part 30 when they receive a direction to switch the task execution parameter set. In Fig. 1, illustration is made only of a characteristic part of the structure of the present embodiment but not of the remaining common part.

Task execution parameters 60 specified in a task execution parameter set 70 that is stored in the task execution parameter set storing part 50 define the parts for controlling the timing for state transition of tasks such as creating, starting, exiting and deleting a task for the real-time OS 10, the priority in the execution of different tasks, the form of task driven (including an drive event in the case of event driven or an drive cycle in the case of cyclic driven).

A task execution parameter set 70 is a collection of task execution parameters 60 associated with all the tasks required for realizing a certain transaction unit of software, organized by every state of the transaction.

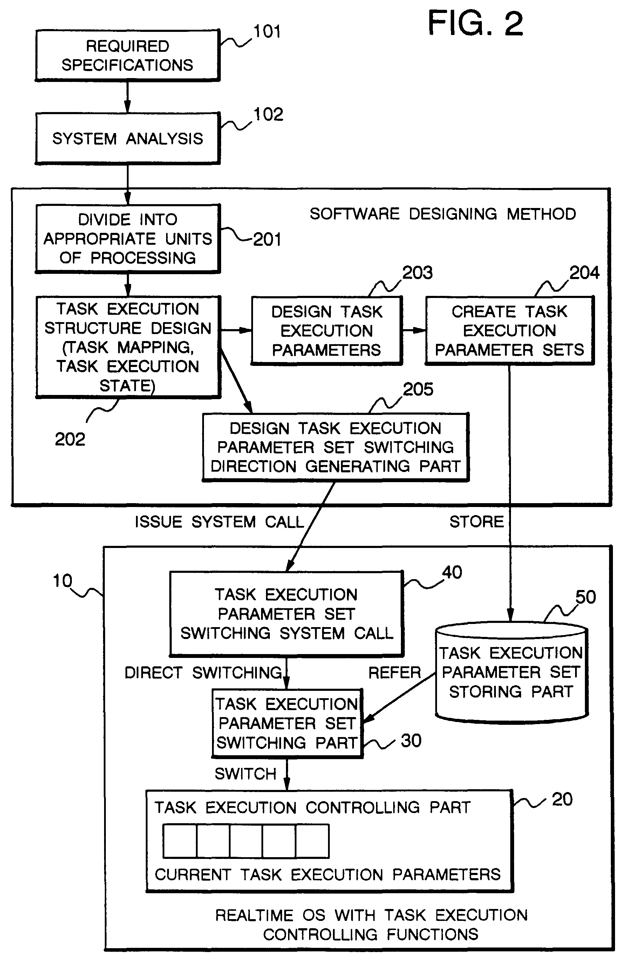

The operation of the present embodiment will be detailed with reference to drawings. First, with reference to Fig. 2, the software design technique required for the operation of a real-time OS 10 of the present embodiment will be described.

The software designer divides the software into appropriate transaction, based on the required specifications 101 and the results of system analysis 102 (Step 201), and designs task execution structures for realizing the transactions (for example, task mapping and state transition) (Step 202).

The software designer then designs appropriate task execution parameters 60 for all the tasks for every state of a transaction (Step 203), and creates task execution parameter sets 70 (Step 204).

Concurrently with the design of the task execution parameters 60, the designer designs a task execution parameter set switching direction generating part 90 for directing the task execution parameter set to be switched (Step 205). The task execution parameter set switching direction generating part 90 detects state transition of a transaction, based on the state transition of each tasks and generation of external events, and, using a task execution parameter set switching system call 40, directs the task execution parameter set 70 to be switched as appropriate according to the state transition of a transaction.

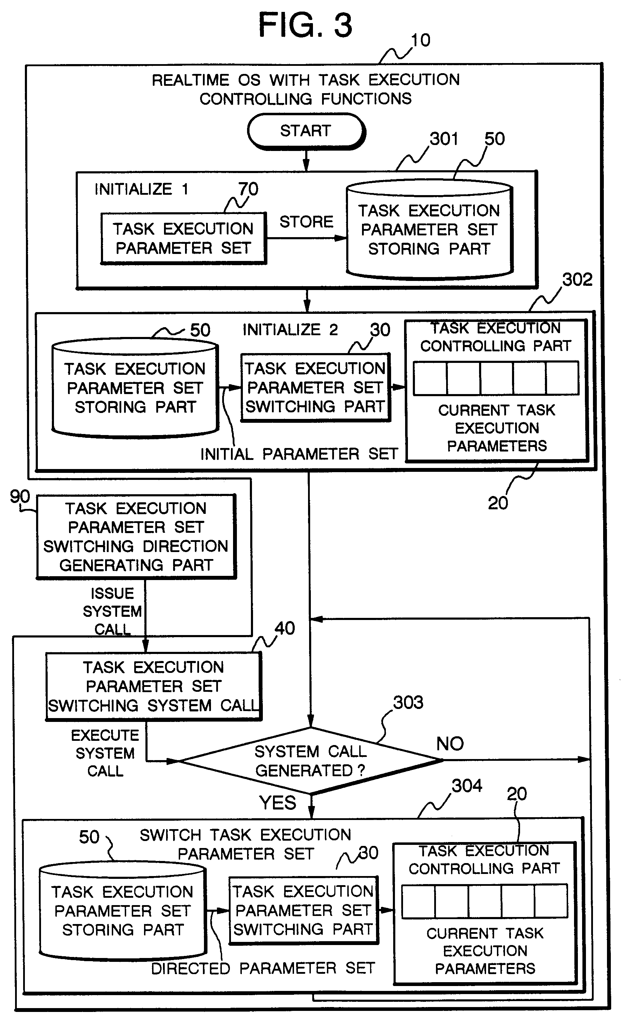

Next, with reference to Fig. 3, the operation of a real-time OS 10 of the present embodiment will be described.

The real-time operating system with task execution controlling functions 10 reads a task execution parameter set 70 and stores it in the task execution parameter storing part 50 (Initialization I; Step 301).

The task execution parameter switching part 30 then refers to the task execution parameter storing part 50 for the task execution parameter set 70 specified as the initial state, and sets the contents of these task execution parameters to the current task execution parameters in the task execution controlling part 20 (Initialization II; Step 302). The task execution controlling part 20 initiates the controlling of all the task executions required for a transaction of software in accordance with the current task execution parameter thus set.

When a task execution parameter set switching system call 40 is issued from the task execution parameter set switching direction generating part 90 (Step 303), the task execution parameter set switching part 30, in accordance with the direction in this task execution parameter set switching system call 40, reads a task execution parameter set 70 from the task execution parameter set storing part 50 and sets the contents of these task execution parameters to the current task execution parameters in the task execution controlling part 20 (Step304). The task execution controlling part 20 controls all the task executions required for processing in accordance with the current task execution parameter thus set.

As stated above, the first embodiment controls the execution of tasks automatically by switching task execution parameters 60 collectively, using a task execution parameter set 70, which is a collection of all the task execution parameters 60 organized by every state of a transaction. By this method, the execution structures that comprise the transaction are not distributed, allowing them to be defined collectively in the task execution parameter set 70.

Furthermore, by using the task execution parameter sets 70 which have been specified explicitly during the design phase, the real-time OS 10 of the present embodiment can control automatically the execution of all the tasks that comprise the transaction.

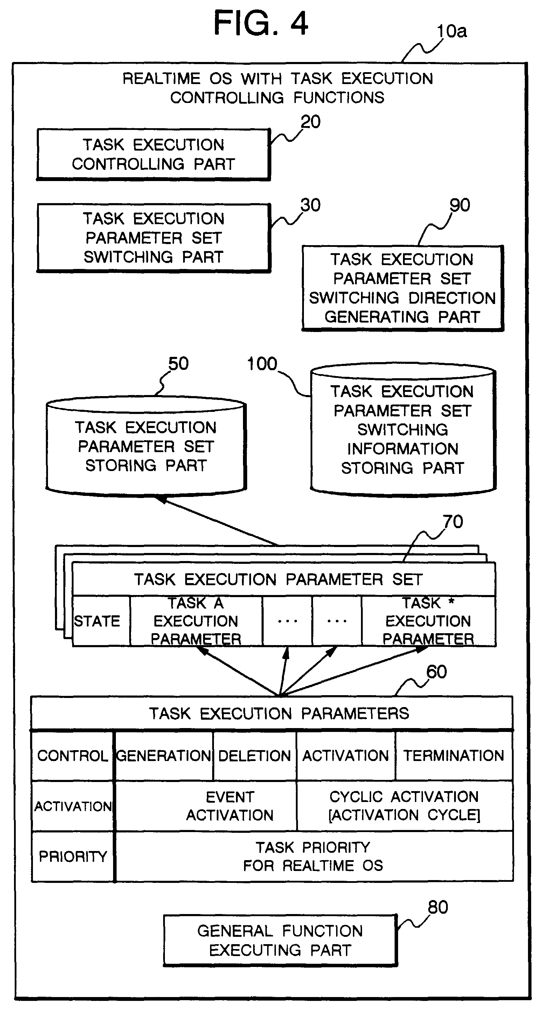

Fig.4 is a block diagram showing the configuration of a real-time OS with task execution controlling functions according to the second embodiment of the present invention.

In Fig.4, similarly to the real-time OS 10 of the first embodiment as shown in Fig. 1, the real-time OS 10a of the second embodiment includes, in addition to a general function execution part 80 for executing general functions as a general real-time OS, a task execution parameter set storing part 50 for storing task execution parameter sets 70, a task execution controlling part 20 for controlling automatically the execution of tasks collectively in accordance with task execution parameters 60 that are specified in the given task execution parameter set 70, a task execution parameter set switching part 30 for reading a task execution parameter set 70 from the task execution parameter set storing part 50 and passing it to the task execution controlling part 20, and task execution parameter switching system calls 40 for notifying the task execution parameter set switching part 30 when they receive a direction to switch the task execution parameter set. The real-time OSa of the present embodiment further includes a task execution parameter switching direction generating part 90 and a task execution parameter set switching information storing part 100. In Fig. 4, illustration is made only of a characteristic part of the structure of the present embodiment but not of the remaining common part.

In the configuration above, all the components other than the task execution parameter switching direction generating part 90 and the task execution parameter set switching information storing part 100 are the same as those of the real-time OS 10 of the first embodiment as shown in Fig. 1. The task execution parameter switching direction generating part 90 is the same as the task execution parameter switching direction generating part 90 used in the first embodiment as shown in Fig.3, and therefore the description of this part will be omitted by assigning the same number as Fig. 1 and Fig. 3.

In the present embodiment, the real-time OS 10a incorporates internally the task execution parameter switching direction generating part 90 so that the real-time OS 10a itself can detect state transition of the transaction and switch the parameter set according to state transition of the transaction. The task execution parameter set switching information storing part 100 stores the definitions of events that indicate state transition of the transaction (for example, state transition of each tasks or occurrence of external events), which are required for directing switching, and data which defines the destination state after state transition of a transaction.

While the first embodiment requires some implementation work, for example, implementing the task execution parameter switching direction generating part 90 that has been specified in the design phase as one of tasks for the real-time OS, the second embodiment allows the real-time OS 10a to direct the task execution parameter to be switched automatically.

Other basic operation is the same as that of the real-time OS 10 of the first embodiment.

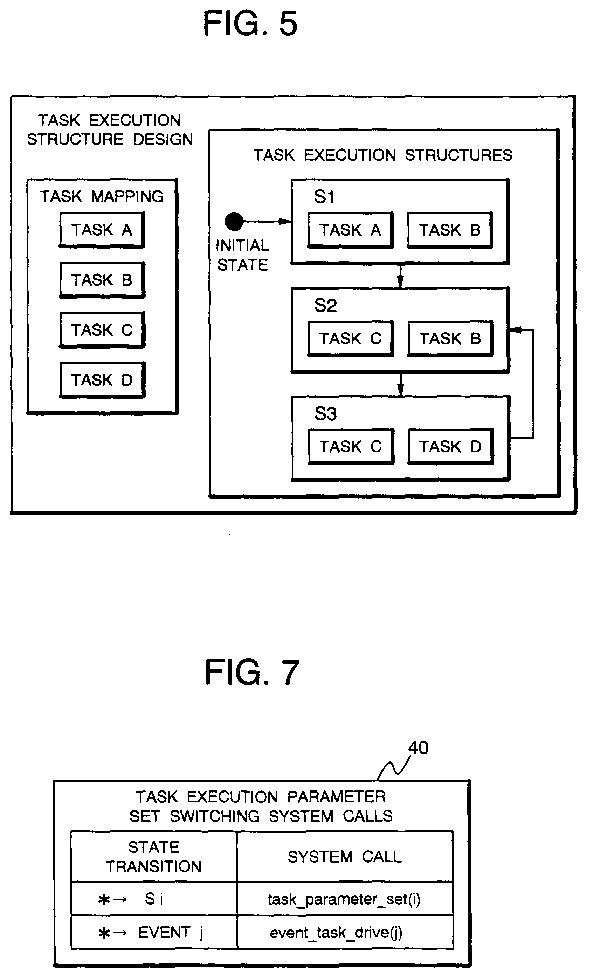

Next, with reference to Figs. 5 to 7, an example of specific application of the real-time OS described above will be described.

Fig. 5 shows an example of the design of task execution structures defined in a task execution parameters 60. As shown in Fig. 5, execution structures are designed by mapping required transaction to four tasks, Task A to Task D. State of the transaction consist of S1, S2, and S3. Tasks A and B operate in state S1, Tasks C and B operate in state S2, and Tasks C and D operate in state S3. The arrows in the figure show the transition among these states.

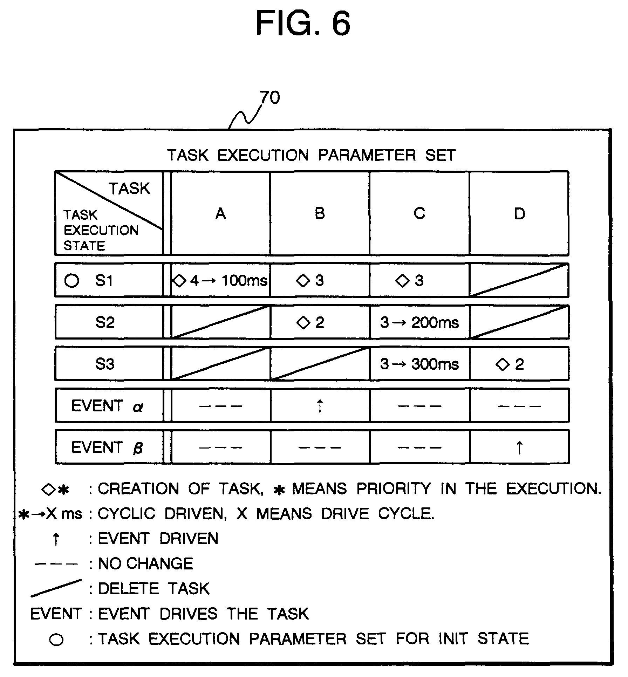

Fig. 6 show the contents of a task execution parameter set 70 created in accordance with the execution structure design described above. In addition to the task execution parameter set for the three states, S1, S2, and S3, there is an additional task execution parameter set that represents the execution structures for Tasks B and D to be driven by external events. Thus, five task execution parameter sets in total are used to represent the execution structures of tasks comprise the transaction. Actions specified as a task execution parameter sets include the timing for state transition of tasks such as creating and deleting a task, cyclic driven, drive cycle, event driven, and execution priority.

There are two different system calls provided as the task execution parameter switching system calls 40, as shown in Fig. 7. One system call is "Task_parameter_set (i)" for switching the task execution parameters in response to the transition among the states S1, S2, and S3. The other is "event_task_drive (j)" for switching the task execution parameters in response to the occurrence of a task drive event in any execution state.

As described in the foregoing, by using a real-time operating system with task execution controlling functions of the present invention, it becomes easier to verify whether the operation of software that is realized through linked actions among multiple tasks is in conformance to required specifications. The reason for this is that, since a real-time operating system with task execution controlling functions of the present invention can control the tasks collectively by using the task execution parameter set which is a collection of task execution parameters for all tasks comprising the transaction of software and has been organized by every state of the transaction, and can define collectively task execution structures that comprise the transaction of software in a task execution parameter set, it is possible to confirm whether the linked actions of all the tasks are in conformance to required specifications simply by verifying whether the contents of the task execution parameter set are in conformance to the required specifications.

Also, by the present invention, it becomes easier to reflect the required specifications for software in the implementation of the software accurately. The reason for this is that, since a real-time operating system with task execution controlling functions of the present invention can reduce largely the implementation work for task execution structures that demands considerable experience and skill by executing automatically all the tasks that comprise the transaction of software according to task execution parameter sets 70 which have been specified explicitly during the design phase, it is eventually possible to reduce the occurrence of errors in the realm that relies on the experience and skill of the implementor.

Furthermore, by the present invention, when verifying whether the required specifications are reflected in the operation of software accurately as well, it is possible to reduce largely the work of confirming the execution structures that must be done by delving into the implementations, since task execution structures can be verified by using task execution parameter sets that are specified in the design phase. It is, therefore, possible for the creator of required specifications to verify specifications during the design phase, which ensures easier understanding.

## Claims

1. A real-time operating system with task execution controlling functions, comprising:
task execution parameter set storing means (50) for storing task execution parameter sets (70), each of which is a collection of task execution parameters (60) for all tasks comprising a transaction of software and has been organized by every state of a transaction based on required specifications and system analysis results during the software design phase,
task execution parameter set switching means (30) for reading one of said task execution parameter sets (70) as required depending on the state of a transaction from said task execution parameter set storing means (50), and
task execution controlling means (20) for controlling the execution of each task by switching execution parameters for multiple tasks collectively by using said task execution parameter set (70) read by said task execution parameter set switching means (30).

2. The real-time operating system with task execution controlling functions as set forth in claim 1, wherein
said task execution parameters (60) include the timing for state transition of tasks such as creating, starting, exiting and deleting a task, the priority in the execution of different tasks, and the form of task driven.

3. The real-time operating system with task execution controlling functions as set forth in claim 1, further comprising
task execution parameter set switching system calls (40) as an interface for notifying said task execution parameter set switching means (30) when real-time operating system receives a direction from user application to switch the task execution parameter set.

4. The real-time operating system with task execution controlling functions as set forth in claim 1, further comprising
switching direction generating means (90) for detecting a state transition of a transaction based on state transition of each tasks and occurrence of external event and directing said task execution parameter set switching means (30) to switch the task execution parameter set as appropriate according to state transition of a transaction.

5. The real-time operating system with task execution controlling functions as set forth in claim 1, further comprising
switching direction generating means (90) for detecting a state transition of a transaction based on state transition of each tasks and occurrence of external event and directing said task execution parameter set switching means (30) to switch the task execution parameter set as appropriate according to state transition of a transaction, and
switching information storing means (100) for storing data which defines event indicating state transition of a transaction that is required by said switching direction generating means (90) to direct the task execution parameter set (70) to be switched, and data which defines the destination state after state transition of a transaction.

6. The real-time operating system with task execution controlling functions as set forth in claim 1, wherein
said task execution parameter sets (70) are read on system initialization and are stored in said task execution parameter set storing means (50),
task execution parameter set (70) that has been specified as initial state is referred to from said task execution parameter set storing means (50) and is set in said task execution controlling means (20), and
when said task execution parameter set switching system call is issued, task execution parameters are read by said task execution parameter set switching means (60) from said task execution parameter set storing means (30) and are set in said task execution controlling means (20).

7. A computer readable memory for storing a real-time operating system with task execution controlling functions, wherein said real-time operating system comprising
task execution parameter set storing step of storing task execution parameter sets, each of which is a collection of task execution parameters for all tasks comprising a transaction of software and has been organized by every state of a transaction based on required specifications and system analysis results during the software design phase,
task execution parameter set switching step of reading one of said task execution parameter sets as required depending on state of a transition from said task execution parameter set storing step, and
task execution controlling step of controlling the execution of each task by switching execution parameters for multiple tasks collectively by using said task execution parameter set read by said task execution parameter set switching step.

8. The computer readable memory as set forth in claim 7, wherein
in said real-time operating system, said task execution parameters include the timing for state transition of tasks such as creating, starting, exiting and deleting a task, the priority in the execution of different tasks, and the form of task driven.

9. The computer readable memory as set forth in claim 7, wherein
said real-time operating system further comprising
task execution parameter set switching system calls as an interface for notifying said task execution parameter set switching step when real-time operating system receives a direction from user application to switch the task execution parameter set.

10. The computer readable memory as set forth in claim 7, wherein
said real-time operating system further comprising
switching direction generating step of detecting a state transition of a transaction based on state transition of each tasks and occurrence of external event and directing said task execution parameter set switching step to switch the task execution parameter set as appropriate according to state transition of a transaction.

11. The computer readable memory as set forth in claim 7, wherein
said real-time operating system further comprising
switching direction generating step of detecting a state transition of a transaction based on state transition of each tasks and occurrence of external event and directing said task execution parameter set switching step to switch the task execution parameter set as appropriate according to changes in such task execution state, and
switching information storing step of storing data which defines event indicating state transition of a transaction that is required by said switching direction generating step to direct the task execution parameter set to be switched, and data which defines the destination state after state transition of a transaction.

12. The computer readable memory as set forth in claim 7, wherein
said real-time operating system
reads said task execution parameter sets on system initialisation and stores the task execution parameter sets in said task execution parameter set storing step,
refers to task execution parameter set that has been specified as initial state from said task execution parameter set storing step and sets the task execution parameter set in said task execution controlling step, and when said task execution parameter set switching system call is issued, reads task execution parameters by said task execution parameter set switching step from said task execution parameter set storing step and sets the task execution parameters in said task execution controlling step.
